(19) Europäisches Patentamt
European Patent Office
Office européen des brevets

(11) **EP 2 753 723 B1**

## (12) FASCICULE DE BREVET EUROPEEN

(45) Date de publication et mention de la délivrance du brevet:
**18.11.2015 Bulletin 2015/47**

(21) Numéro de dépôt: **11764796.6**

(22) Date de dépôt: **06.09.2011**

(51) Int Cl.:
*C22C 38/02* *(2006.01)*    *C22C 38/04* *(2006.01)*
*C22C 38/08* *(2006.01)*    *C22C 38/14* *(2006.01)*
*C21D 6/00* *(2006.01)*    *C21D 6/02* *(2006.01)*

(86) Numéro de dépôt international:
**PCT/FR2011/000490**

(87) Numéro de publication internationale:
**WO 2013/034815 (14.03.2013 Gazette 2013/11)**

(54) **ACIER LAMINE DURCISSANT PAR PRECIPITATION APRES FORMAGE A CHAUD ET/OU TREMPE SOUS OUTIL A TRES HAUTE RESISTANCE ET DUCTILITE ET SON PROCEDE DE FABRICATION**

DURCH AUSFÄLLUNG NACH DER HEISSFORMUNG UND/ODER ABSCHRECKUNG AUSHÄRTENDER WALZSTAHL MIT EINEM WERKZEUG VON SEHR HOHER FESTIGKEIT UND DUKTILITÄT SOWIE HERSTELLUNGSVERFAHREN DAFÜR

ROLLED STEEL THAT HARDENS BY MEANS OF PRECIPITATION AFTER HOT-FORMING AND/OR QUENCHING WITH A TOOL HAVING VERY HIGH STRENGTH AND DUCTILITY, AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**16.07.2014 Bulletin 2014/29**

(73) Titulaire: **Arcelormittal Investigación y Desarrollo SL**
**48910 Sestao, Bizkaia (ES)**

(72) Inventeurs:
• **BOUAZIZ, Olivier**
  **F-57000 Metz (FR)**
• **BARBIER, David**
  **F-57000 Metz (FR)**
• **JUNG, Coralie**
  **F-57320 Neunkirchen-les-Bouzonville (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
• **JOÃL MARANDEL ET AL: "MÃ TALLURGIE. - MÃ CR canisme de durcissement par prÃ CR cipitation dans un alliage ferreux martensitique au manganÃse contenant du silicium et du titane", COMPTES RENDUS HEBDOMADAIRES DES SÃ CR ANCE DE L'ACADÃ CR MIE DES SCIENCES,, vol. 276, no. 19, 9 mai 1973 (1973-05-09), pages 1509-4542, XP001265401,**
• **WATSON J D ET AL: "The strength and ductility of precipitation-hardened Fe-Si-Ti alloys", METAL SCIENCE, METALS SOCIETY, LONDON, GB, vol. 8, no. 1, 1 janvier 1971 (1971-01-01), pages 9-20, XP009160176, ISSN: 0306-3453**

EP 2 753 723 B1

## Description

La présente invention couvre la fabrication de pièces d'acier laminé présentant des propriétés mécaniques élevées de résistance et de formabilité, en particulier après emboutissage à chaud et/ou trempe dans l'outil suivi d'un traitement thermique de durcissement.

Cette offre en matériau résistant répond à la forte demande de réduction d'émissions de gaz à effet de serre associée à la croissance des exigences de sécurité automobile et celle des prix du carburant. Ces trois contraintes ont en effet poussé les constructeurs de véhicules terrestres à moteur à utiliser des aciers à résistance mécanique de plus en plus élevée dans la carrosserie afin de réduire l'épaisseur des pièces et donc le poids des véhicules tout en maintenant les performances de résistance mécanique des structures voire en améliorant celles-ci. Pieds milieux, traverses de pare choc, pièces anti-intrusives et autres pièces de sécurité sont des exemples de pièces nécessitant une résistance mécanique élevée pour assurer leur fonction première et une formabilité suffisante pour la mise en forme de ladite pièce.

La formation d'aciers à haut niveau de résistance mécanique requiert une séquence bien connue consistant en la genèse d'une phase mère : l'austénite, de la transformation de celle-ci en bainite et/ou martensite et éventuellement de l'ajustement des propriétés mécaniques et en particulier de la dureté de cette dernière par divers traitements thermiques ou thermomécaniques en fonction du comportement en service visé pour la pièce finale.

Le comportement mécanique de la martensite est notamment lié à la teneur en carbone, en effet, plus la martensite est concentrée en carbone, plus elle sera dure.

L'article intitulé « Martensite in steel: strength and structure » de G. Krauss et publié dans « Materials Science and Engineering » A273-275 (1999) pages 40 à 57 illustre bien le lien entre la teneur en carbone et la dureté de la martensite, ce lien étant quasi linéaire avec la racine carrée de la teneur en carbone en pourcentage du poids. Des résistances mécaniques bien au-delà de 1500 MPa peuvent être atteintes par la combinaison d'une hausse de la teneur en carbone et de l'ajout d'éléments divers de durcissement par solution solide ou de durcissement par précipitation. La ductilité d'un matériau ayant une résistance aussi élevée est cependant rédhibitoire pour former une pièce de structure, ainsi la combinaison optimale connue à ce jour consiste à obtenir le niveau de résistance élevé après la mise en forme de la pièce, mise en forme pouvant se faire à chaud. Il est très avantageux d'avoir une faible résistance avant la mise en forme, donc une ductilité améliorée, pour la faciliter.

L'approche mentionnée ci-dessus figure dans la demande de brevet WO2009145563 concernant une tôle d'acier à très haute résistance présentant d'excellentes propriétés de traitement à chaud, ladite tôle contenant, en % en poids, C: 0,2 à 0,5%, Si: 0,01 à 1,5%, Mn: 0,5 à 2,0%, P: 0,1% ou moins (mais pas 0%), S: 0,03% ou moins (mais pas 0%), Al soluble: 0,1% ou moins (mais pas 0%), N: 0,01 à 0,1%, et Cr: 0,1 à 2,0%, le reste étant constitué de Fe et d'impuretés inévitables. Cette tôle d'acier présente une résistance à la traction, mesurée avant mise en forme à chaud, inférieure ou égale à 800 MPa. La tôle est mise en forme à chaud et rapidement refroidie de façon à présenter une résistance à la traction supérieure ou égale à 1800 MPa.

Cependant, les niveaux de carbone décrits dans ce document (0,2 à 0,5%) sont à ce jour connus pour être source de difficultés en termes de soudage par point pour la caisse en blanc des véhicules terrestres à moteurs i.e. la structure assemblée.

Par ailleurs, la demande de brevet WO200136699 concerne une composition et un procédé de fabrication de produits en acier inoxydable martensitique se durcissant par précipitation, dont la composition contient au moins 0,5 % en poids de Cr et au moins 0,5 % en poids de Mo, la somme de Cr, Ni et Fe dépassant 50 %. La microstructure obtenue contient au moins 50 % de martensite et l'acier subit ensuite un traitement de vieillissement entre 425 et 525 °C pour obtenir une précipitation de particules quasicristallines. Ce matériau répond aux exigences de résistance à la corrosion, de haute résistance et de bonne ténacité. L'exemple de l'invention est un acier possédant une limite d'élasticité de 1820 MPa, et un allongement total de 6,7%. Si le matériau obtenu est très résistant avec près de 1800 MPa de résistance mécanique, une pièce complexe ne peut être mise en forme avec une tôle si résistante car on sait que cela a pour corollaire une ductilité relativement faible laissant peu de marge de manoeuvre pour les pièces nécessitant de la formabilité.

L'invention vise ainsi à résoudre les problèmes posés en proposant un acier aisément soudable dans les conditions industrielles, présentant des propriétés mécaniques de résistance et de ductilité élevées sur la pièce emboutie à chaud après un traitement thermique de durcissement. Pour ce faire, l'invention vise à mettre à disposition un acier laminé qui, après emboutissage à chaud et traitement thermique de précipitation, présente une limite d'élasticité supérieure ou égale à 1300 MPa, et un allongement à rupture supérieur ou égal à 4%. L'invention vise également à éviter l'ajout excessif d'éléments d'alliage couteux pour obtenir ces propriétés.

Dans le cadre de la présente invention, on entend par flan, le résultat de la découpe d'une tôle et par pièce le résultat de l'emboutissage d'une tôle ou d'un flan.

L'invention a pour objet une tôle ou un flan en acier laminé dont la composition comprend, les teneurs étant exprimées en poids : C ≤ 0,1% ; 0,5% ≤ Mn ≤ 7% ; 0,5% ≤ Si ≤ 3,5% ; 0,5%<Ti≤2% ; 2 % < Ni ≤ 7% ; Al ≤ 0,10% ; Cr ≤ 2% ; Cu ≤ 2% ; Co ≤ 2% ; Mo ≤ 2% ; S ≤0,005% ; P ≤ 0,03% ; Nb≤0,1% ; V≤0,1% ; B<0,005% ; N≤0,008%, étant entendu que les teneurs en silicium et en titane sont telles que :

$$Si + Ti \geq 2,5 \% \ et \frac{Ti}{Si} \geq 0,3$$

le reste de la composition étant constitué de fer et d'impuretés inévitables résultant de l'élaboration.

Dans un mode de réalisation préféré, la tôle ou le flan présente la composition suivante en pourcentage en poids : C≤0,050 % ; 3≤Mn≤5% ; 1,0≤Si≤3,0% ; 0,5≤Ti≤1,5% ; 2,5≤Ni≤3,5% ; Al ≤ 0,10%; Cr ≤ 1% ; Cu ≤ 0,05% ; Co ≤ 1 % ; Mo ≤ 2% ; S ≤0,005% ; P ≤ 0,03% ; Nb≤0,1% ; V≤0,1% ; B<0,005% ; N≤0,008%, étant entendu que les teneurs en silicium et en titane sont telles que :

$$Si + Ti \geq 2,5 \% \ et \frac{Ti}{Si} \geq 0,3$$

le reste de la composition étant constitué de fer et d'impuretés inévitables résultant de l'élaboration.

L'invention a également pour objet une pièce fabriquée à partir d'une tôle ou d'un flan selon l'invention, dont la microstructure comprend au moins 95% de martensite, et des précipités intermétalliques de type $Fe_2TiSi$.

Selon un mode de réalisation préféré, la fraction surfacique des précipités intermétalliques de type $Fe_2TiSi$ de la pièce est comprise entre 1 et 5 %.

Selon un mode de réalisation préféré, le rayon moyen des précipités, est compris entre 1 et 10 nanomètres.

Selon un mode préféré, la limite d'élasticité de la pièce en acier est supérieure ou égale à 1300 MPa et l'allongement à rupture est supérieur ou égal à 4%.

Selon un mode préféré, la pièce d'acier comprend un revêtement contenant du zinc, un alliage de zinc ou un alliage à base zinc.

Selon une variante de l'invention, la pièce d'acier comprend un revêtement contenant de l'aluminium, un alliage d'aluminium ou un alliage à base d'aluminium.

L'invention a également pour objet un procédé de fabrication d'une pièce en acier, comportant les étapes successives selon lesquelles :

- on approvisionne une tôle d'acier laminé de composition ci-dessus dont la microstructure comprend moins de 1% de précipités intermétalliques de type $Fe_2TiSi$ en proportion surfacique, puis on découpe la tôle pour obtenir un flan que l'on peut éventuellement souder. Le flan est ensuite porté à une température $T_\gamma$ pendant une durée $t_\gamma$ dans un four telles que la structure de l'acier devienne entièrement austénitique. Ensuite, le flan est éventuellement extrait puis embouti à chaud au dessus de la température Ms. La pièce est ensuite refroidie à l'air ou par trempe sous outil, à une vitesse $V_{ref1}$ afin d'obtenir une structure essentiellement martensitique à partir de la structure austénitique mère, le refroidissement suivant l'emboutissage se fera donc jusque sous Ms. On entend par structure « essentiellement martensitique», une structure contenant au moins 95% de martensite. Enfin, un traitement thermique de précipitation d'intermétalliques de type $Fe_2TiSi$ en proportion surfacique comprise entre 1% et 5% s'ensuit à la température $T_{OA}$ pendant un temps $t_{OA}$ afin de durcir la pièce et de lui conférer les propriétés mécaniques visées dans le cadre de l'invention.

L'invention a également pour objet un procédé de fabrication d'une pièce en acier, comportant les étapes successives selon lesquelles on approvisionne une tôle d'acier laminé de composition ci-dessus dont la microstructure comprend moins de 1 % de précipités intermétalliques de type $Fe_2TiSi$ en proportion surfacique, puis on découpe la tôle pour obtenir un flan que l'on peut éventuellement souder. Le flan est ensuite embouti à froid pour obtenir une pièce ou une préforme de la pièce finale visée. La pièce ou préforme est ensuite réchauffée à une vitesse $V_{c1}$ quelconque dans un four à une température $T_\gamma$ pendant une durée $t_\gamma$ de manière à obtenir une structure entièrement austénitique avant d'être éventuellement extraite puis emboutie à chaud pour lui conférer la forme finale. La pièce est ensuite refroidie à l'air ou par trempe sous outil à une vitesse $V_{ref1}$ afin d'obtenir une structure essentiellement martensitique à partir de la structure austénitique mère, le refroidissement suivant l'emboutissage se fera donc jusque sous Ms. Enfin, un traitement thermique de précipitation d'intermétalliques de type $Fe_2TiSi$ en proportion surfacique comprise entre 1% et 5% s'ensuit à la température $T_{OA}$ pendant un temps $t_{OA}$ afin de durcir la pièce et de lui conférer les propriétés mécaniques visées dans le cadre de l'invention.

Selon un mode préféré, la température $T_\gamma$ est comprise entre 700 et 1200 °C, et de façon plus particulièrement préférée entre 880 et 980 °C.

De manière préférentielle, la durée de maintien $t_\gamma$ est comprise entre 60 et 360 secondes.

De manière préférée, la vitesse de refroidissement, après emboutissage à chaud, $V_{ref1}$ entre $T_\gamma$ et la température de transformation martensitique $M_s$ est comprise entre 10°C/s et 70°C/s.

Selon un mode particulier, le traitement thermique de précipitation d'intermétalliques consistera à chauffer la pièce à une vitesse $V_{c2}$ quelconque jusqu'à la température de maintien $T_{OA}$ durant un temps $t_{OA}$ puis à refroidir la pièce à la vitesse $V_{ref2}$ supérieure à 1°C/s de manière à lui conférer les caractéristiques mécaniques visées. Un refroidissement à l'air est particulièrement préféré.

Selon un mode préféré, la température de maintien $T_{OA}$ est comprise entre 400 et 600°C

Selon un mode préféré, le temps de maintien $t_{OA}$ à $T_{OA}$ est compris entre 30 et 600 minutes.

L'invention a également pour objet une pièce selon l'invention, chauffée à la température $T_{OA}$ pendant une durée $t_{OA}$, puis revêtue de zinc, d'un alliage de zinc ou d'un alliage à base zinc.

L'invention a également pour objet une pièce selon l'invention, chauffée à la température $T_{OA}$ pendant une durée $t_{OA}$, puis revêtue d'aluminium, d'un alliage d'aluminium ou d'un alliage à base d'aluminium.

L'invention a également pour objet l'utilisation d'une pièce selon l'invention pour la fabrication de pièces de structure ou de sécurité pour véhicules terrestres à moteurs. Les pièces anti-intrusives seront particulièrement visées.

D'autres caractéristiques et avantages dans le cadre de l'invention vont apparaître par la suite et feront éventuellement référence aux figures suivantes qui représentent :

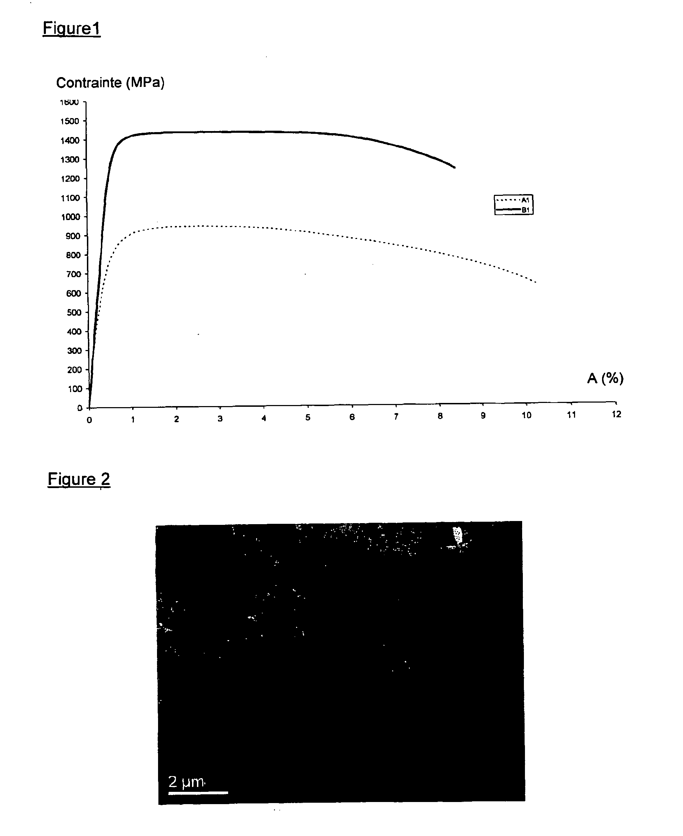

- Figure 1 : deux courbes conventionnelles de traction montrant le comportement mécanique de l'acier selon l'invention issu de la coulée 1, essai A dans le tableau 3 des exemples. La courbe en pointillé indique le comportement mécanique en traction uni-axiale après $t_\gamma$ = 180 secondes d'austénitisation à $T_\gamma$ = 950 °C suivi d'un refroidissement $V_{ref1}$ de 30°C/s jusqu'à l'ambiante se situant sous $M_s$. La courbe continue indique le comportement mécanique en traction uni-axiale après le traitement thermique de précipitation d'intermétalliques nanométriques à $T_{OA}$ = 500°C pendant $t_{OA}$ = 180 minutes.
- Figure 2 : une photo de la microstructure intermédiaire entièrement martensitique après le refroidissement $V_{ref1}$ à 30°C/s. Elle illustre, en outre, la microstructure correspondant à la courbe en pointillé de la figure 1.

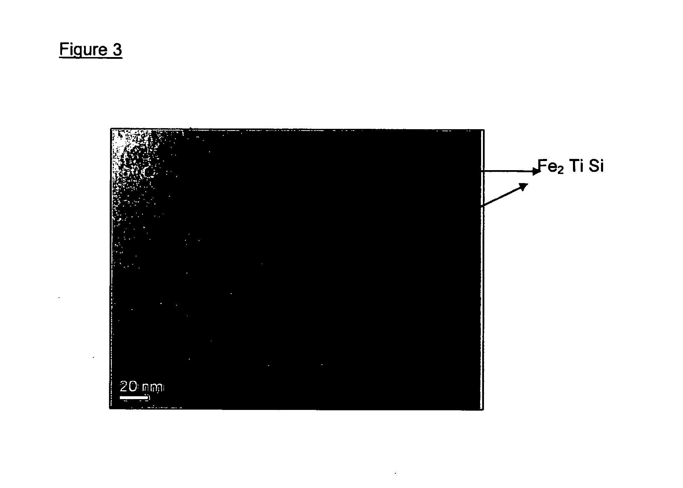

- Figure 3 : une photo de la microstructure d'un acier selon l'invention après le traitement thermique de précipitation d'intermétalliques. Il y est indiqué, avec les flèches noires, les précipités de $Fe_2TiSi$. Elle illustre, en outre, la microstructure correspondant à la courbe continue de la figure 1.

Pour la composition chimique de l'acier de l'invention, les teneurs données font référence à des pourcentages en poids.

La teneur en carbone doit être inférieure ou égale à 0,1% en poids car au dessus de cette limite, s'amorce la chute de la ténacité de la martensite à bas carbone qui constitue la matrice de l'acier de l'invention. En outre, on souhaite aussi éviter la formation de carbures de titane TiC nuisibles à la formabilité et consommateurs de titane. De manière préférentielle, on souhaite limiter la teneur en carbone à 0,05% pour réduire au maximum le risque d'obtenir une martensite fragile.

La teneur en manganèse sera comprise entre 0,5 et 7 %. Cet élément a un rôle désoxydant et ses propriétés de durcissement par solution solide d'insertion sont mises à profit pour atteindre les propriétés mécaniques visées. D'autre part, son effet positif sur la trempabilité est aussi utilisé pour obtenir une structure martensitique à partir de l'austénite mère avec, par exemple, un cycle de refroidissement à l'air. Ainsi une teneur minimum de 0,5% est préconisée dans le cadre de l'invention. Néanmoins, afin d'éviter un comportement fragile du matériau à l'ambiante, une limite supérieure de 7% est fixée dans le cadre de l'invention. De manière préférentielle, une limite inférieure de 3% et une limite supérieure de 5% seront privilégiées pour obtenir les meilleurs résultats par rapport à la cible de l'invention.

En ce qui concerne le silicium, une teneur comprise entre 0,5 et 3,5% est visée. Cet élément a un effet positif sur la trempabilité de l'acier et est utilisé dans le cadre de l'invention en vue d'une précipitation fine d'intermétalliques de type $Fe_2SiTi$. Il faut donc une teneur minimale de 0,5% afin d'obtenir une quantité suffisante de Si pour former les précipités $Fe_2SiTi$ intermétalliques. Néanmoins, le silicium est connu pour générer de la fragilité rendant le laminage difficile, ainsi au delà de 3,5%, le laminage pourrait mener à une rupture et interrompre le procédé industriel. De manière préférentielle, une teneur en silicium comprise entre 1,0% et 3,0% inclus sera préconisée pour obtenir les meilleurs résultats en termes de taille, densité surfacique et distribution de précipités intermétalliques $Fe_2TiSi$.

La quantité de titane sera comprise entre 0,5 et 2% pour équilibrer le système ternaire Fe-Si-Ti, c'est-à-dire avoir une stoechiométrie favorable à la formation de composés $Fe_2TiSi$ selon l'invention. Une teneur minimale de 0,5% en titane est nécessaire dans le but de former suffisamment de précipités intermétalliques fins $Fe_2SiTi$. Néanmoins, en quantité supérieure à 2%, le risque de former des carbures de titane grossiers devient trop important, or ces derniers nuisent à la formabilité et consomment du titane. Ainsi la teneur maximale en visée en titane est de 2%. De manière préférentielle, une teneur en titane comprise entre 0,5 et 1,5% inclus sera privilégiée pour obtenir les meilleurs résultats en termes de taille, densité et distribution de précipités intermétalliques $Fe_2TiSi$.

La teneur en nickel sera comprise entre 2 et 7%. Cet élément permet d'augmenter la taille du domaine austénitique, d'améliorer les propriétés anticorrosives, et d'augmenter la ténacité du matériau. Néanmoins, le coût de cet élément impose de limiter sa teneur à 7%. En dessous de 2%, les effets positifs susnommés sont de faible ampleur. De manière préférentielle, la teneur en nickel sera comprise entre 2,5 et 3,5% pour atteindre les cibles de l'invention.

Dans le cadre de l'invention, la teneur en aluminium sera limitée à 0,10%. Une austénitisation complète est requise lors du chauffage à la température $T_\gamma$ afin que la matrice de l'acier devienne entièrement austénitique, or l'aluminium est un élément connu pour être très alphagène, c'est-à-dire qu'il tendra à augmenter la température à partir de laquelle on atteint le domaine entièrement austénitique. D'autres caractéristiques, telles qu'une coulabilité plus difficile des aciers chargés en aluminium, sont rédhibitoires par rapport à l'invention, cette caractéristique principale pousse les inventeurs à limiter la teneur en aluminium à 0,10%.

La teneur en chrome est inférieure ou égale à 2%. Cet élément peut être, dans le cadre de cette invention, un substitut couteux au manganèse de par son effet principal sur la trempabilité voire un élément additionnel de durcissement. De manière préférentielle le chrome sera limité à 1%.

La teneur en cuivre est inférieure ou égale à 2%. Cet élément serait de même un intéressant, mais couteux, substitut au manganèse mais des risques de faïençage apparaitraient alors et nuiraient ainsi à la forgeabilité à chaud. Ainsi, de manière préférentielle le cuivre sera limité à 0,05%.

La teneur en cobalt sera limitée à 2%. La durée du traitement thermique de précipitation d'intermétalliques, ayant lieu après la mise en forme finale de la pièce de structure, peut être réduite par l'ajout de cet élément qui a, en plus, un rôle positif sur la ténacité. Ainsi du cobalt peut être ajouté pour accélérer la cinétique de précipitation d'intermétalliques durcissant, cependant cet élément est couteux et pour cette raison, on en limite l'usage à 2, voire à 1%.

Le molybdène voit son ajout limité à 2% dans le cadre de l'invention car c'est un élément couteux quand bien même il peut aussi être rajouté pour sa contribution à l'augmentation de la résistance par solution solide ou pour son effet positif sur la trempabilité.

La teneur en bore sera strictement inférieure à 0,005 % car au dessus on risque de former $TiB_2$ dès le stade liquide voire des nitrures de bore. Ce type de précipité étant nettement moins durcissant que $Fe_2TiSi$, une partie du titane ne serait alors plus disponible pour durcir suffisamment l'acier.

La teneur en azote est limitée à 0,008% car, on ne souhaite pas former de nitrures de titane TiN grossiers du fait du caractère nuisible de cette inclusion sur la formabilité.

Les éléments de micro-alliages tels que le niobium et le vanadium ont des teneurs limitées à 0,1%. Ils peuvent être utilisés afin d'affiner la taille de grain austénitique pour améliorer la résistance mécanique. Cependant, le domaine de précipitation de ces éléments figurant à une température supérieure à celle de la transformation martensitique au refroidissement, on ne pourra pas les utiliser pour durcir par précipitation lors du traitement thermique. On risquerait d'obtenir un acier dur et donc peu formable avant même l'emboutissage car contenant des précipités à base de niobium et vanadium, ce qui réduit la capacité d'emboutissage sans apparition de fissures.

Les éléments tels que le soufre et le phosphore sont limités à l'état d'impuretés à l'échelle industrielle et ont donc respectivement pour limites maximum : 0,005% et 0,03%.

La matrice des tôles et flans selon l'invention est essentiellement martensitique. Cette martensite présente une concentration en carbone égale à la teneur nominale qui sera ensuite appelée martensite à bas carbone. On peut en outre tolérer jusqu'à 5% d'austénite résiduelle en proportion surfacique dans la microstructure.

Cette matrice contient des précipités intermétalliques de type $Fe_2TiSi$. Afin d'atteindre les cibles visées par l'invention, il est nécessaire d'avoir une taille, densité et une distribution de ces précipités intermétalliques de type $Fe_2TiSi$ particulières que l'on obtient, sur la pièce, grâce au traitement thermique de précipitation et par la combinaison suivante :

- la somme de la teneur massique du silicium et du titane est supérieure ou égale à 2,5%.
- le rapport de la teneur massique du titane sur celle du silicium est supérieur ou égal à 0,3.

Les tôles selon l'invention pourront être fabriquées par tout procédé adapté. On préfère cependant utiliser le procédé selon l'invention qui comporte plusieurs étapes.

On approvisionne tout d'abord une tôle ou un flan découpé à partir d'une tôle ayant une composition selon l'invention. La fabrication de la tôle se fera, par exemple, par coulée d'acier liquide, qui, une fois refroidi donnera une brame. Le réchauffage de la brame se fera entre 1100°C et 1275°C pendant une durée suffisante pour que la température soit identique en tout point de la brame. Après le réchauffage et une fois la température homogène dans la brame, on procédera au laminage à chaud avec une température de fin de laminage $T_{fl}$ supérieure ou égale à 890°C, car on souhaite être au dessus de $Ar_3$, le laminage devant se faire dans le domaine austénitique.

Suite à ce laminage à chaud, une étape importante de l'invention consiste à refroidir l'acier jusqu'à une température de bobinage $T_{bob}$ inférieure à 400°C afin d'éviter toute précipitation prématurée d'intermétalliques. La vitesse de refroidissement $V_{bob}$ jusqu'à $T_{bob}$ sera comprise entre 30°C/s et 150°C/s. L'acier est ensuite éventuellement bobiné avec refroidissement à l'air de la température $T_{bob}$ à l'ambiante.

Selon une variante de l'invention, on peut souder le flan à d'autres éléments en acier pour former une structure plus complexe avant austénitisation et emboutissage. On sait en effet que, selon l'application, il peut y avoir certaines régions d'une pièce qui peuvent nécessiter des propriétés mécaniques ou épaisseurs différentes du reste de la pièce. Ainsi dans un souci principal de gain de poids et d'efficacité, certaines pièces peuvent présenter différents aciers et/ou différentes épaisseurs, assemblés sous une forme appelée flans raboutés ou flans à épaisseurs variable issus d'un laminage flexible. Le soudage peut s'effectuer avec toutes les technologies existantes (soudage laser, soudage à l'arc, soudage par résistance par point, etc....) tandis que le flan à épaisseur variable nécessite un laminage à chaud ou à froid flexible avec écartement variable des rouleaux de laminage.

Selon une autre variante de l'invention, avant le chauffage de la tôle ou du flan, on peut déformer le flan à froid de manière à se reprocher partiellement de la pièce finale ou à former la pièce déjà à froid si celle-ci ne présente pas de difficulté particulière nécessitant un emboutissage à chaud. Enfin, cette étape de déformation à froid peut aussi permettre d'avoir une préforme plus adaptée à l'outil de refroidissement ultérieur qui permettra ainsi un meilleur contact entre l'outil et la pièce pour que le refroidissement s'effectue de manière plus homogène et plus rapide. Cette déformation à froid peut aussi simplement servir à davantage réduire l'épaisseur de l'acier.

Suite à ces deux variantes à la fois optionnelles et cumulables, on chauffe la tôle ou le flan dans un four de traitement thermique à une température dite d'austénitisation $T_\gamma$ supérieure à Ac3. Ce dernier paramètre correspondant à la température à partir de laquelle la microstructure du matériau est entièrement austénitique. La température de recuit austénitique $T_\gamma$ sera comprise entre 700°C et 1200°C. Par souci d'homogénéisation, l'acier ou la zone à chauffer dans le domaine austénitique sera de préférence maintenue à la température $T_\gamma$ pendant une durée $t_\gamma$ comprise entre 60 secondes et 360 secondes. Un temps plus long serait économiquement peu rentable à l'échelle industrielle, l'objectif premier étant l'homogénéisation à la température $T_\gamma$ du flan. De manière préférentielle la température de recuit austénitique $T_\gamma$ sera comprise entre 880°C et 980°C.

Le flan ou la tôle ainsi chauffée à la température $T_\gamma$ pendant le temps $t_\gamma$ peut être éventuellement extrait du four puis déformé à chaud afin d'obtenir la pièce finale. Dans le cas où il y a déjà eu une préforme à froid, la forme finale est alors imprimée et le contact entre la pièce et l'outil de refroidissement sera meilleur.

De manière préférentielle, la taille moyenne du grain de l'austénite mère, obtenue après la chauffe au dessus d'$Ac_3$ et avant l'emboutissage à chaud est inférieure à 30 micromètres.

L'acier présente des propriétés mécaniques stables entre 10 et 70°C/s, ce qui présente l'avantage industriel de pouvoir utiliser le même outil de refroidissement ou de trempe quelque soit l'épaisseur de la pièce à refroidir. En outre, le refroidissement par maintien dans l'outil permet de maitriser la géométrie de la pièce.

Une technologie évitant le transfert de la tôle et permettant d'emboutir immédiatement après le chauffage et l'homogénéisation de la température dans le four représente un avantage en termes de productivité industrielle.

Sans cette technologie, une fois le flan transféré dans la presse pour l'emboutissage, l'outil d'emboutissage à chaud permet aussi un refroidissement par conduction et la vitesse de refroidissement ainsi que l'homogénéité de celui-ci dépendent de l'épaisseur de la tôle, de la température $T_\gamma$, du temps de transfert entre le four et l'outil de formage à chaud, et du système de refroidissement de l'outil. La trempabilité de l'acier de l'invention est telle qu'un refroidissement à l'air suffit à former une structure essentiellement martensitique à l'ambiante et stabiliser moins de 5% d'austénite. Cela sous entend que toute vitesse supérieure à celle d'un refroidissement air jusqu'à une température Ms permet de former la structure essentiellement martensitique, une limite de 70°C/S a été fixée pour améliorer l'homogénéité et être fidèle aux réalités industrielles. En outre, le refroidissement par maintien dans l'outil a l'avantage de permettre une maitrise de la forme de la pièce. La température de début de transformation martensitique sera calculée par la formule de K. Ishida dans « Journal of Alloys Compound. 220 » (1995), page126. »

$$Ms(^\circ C) = 545 - 33000 \times C_c + 200 \times C_{Al} + 700 \times C_{Co} - 1400 \times C_{Cr} - 1300 \times C_{Cu}$$
$$-2300 \times C_{Mn} - 500 \times C_{Mo} - 400 \times C_{Nb} - 1300 \times C_{Ni} - 700 \times C_{Si} + 300 \times C_{Ti} + 400 \times C_V,$$

les teneurs étant massiques.

La vitesse de refroidissement en dessous de la température Ms influera sur les propriétés mécaniques de la martensite en opérant à un revenu de la martensite, abaissant la dureté de celle-ci en lien avec la lenteur du refroidissement sous Ms. Il est conseillé d'avoir une vitesse de refroidissement au moins égale au refroidissement à l'air. $T_{int}$ est la température sous $M_s$ à laquelle s'arrête le refroidissement après l'emboutissage et se situant avant l'étape du traitement thermique de précipitation d'intermétallique.

Ensuite, la tôle ou le flan subit un traitement thermique de précipitation d'intermétalliques nanométriques durcissant sous la forme $Fe_2TiSi$. Ce traitement s'effectue à une température $T_{OA}$ comprise entre 400 et 600°C, cet intervalle de température étant celui correspondant aux précipités susnommés. Le maintien à cette température $T_{OA}$ se fera pendant un temps $t_{OA}$ étant compris entre 30 et 600 minutes. L'étape du refroidissement de la pièce jusque sous $M_s$

peut être directement suivie du traitement thermique détaillé ci-dessus sans que la température ambiante soit atteinte. Ce traitement thermique durcissant présente l'avantage d'être effectué après l'emboutissage à chaud ou à froid, la résistance mécanique est, avant précipitation d'intermétalliques, inférieure à 1000 MPa tel qu'illustré dans la figure 1 avec la courbe en pointillé. Ceci permet d'avoir plus de ductilité qu'avec un acier avec une structure durcie avant même l'emboutissage, des pièces complexes deviennent donc accessibles.

La microstructure selon l'invention comprend donc une matrice martensitique à bas carbone présente sous forme d'îlots avec une configuration en lattes à l'intérieur de laquelle figure une précipitation de type $Fe_2TiSi$ présentant une fraction surfacique comprise entre 1 et 5 % et un rayon moyen de précipité compris entre 1 et 10 nanomètres. Pour ce dernier critère, on assimile le précipité à un cercle dont on mesure le rayon.

Les pièces ainsi formées peuvent être assemblées par soudage à d'autres éléments de taille, forme, épaisseur et composition différentes afin de former une structure plus grande et plus complexe. Les pièces ainsi formées peuvent par la suite être revêtues au trempé ou par électrolyse par un revêtement approprié si des exigences anticorrosives ou esthétiques sont requises.

A titre illustratif et non limitatif, d'autres avantages conférés par l'invention vont apparaître au travers des essais suivants.

Trois compositions chimiques ont été coulées dont la première correspond à l'invention (acier 1) et les deux autres (aciers 2 et 3) correspondent à des références. On souhaite démontrer l'intérêt de l'invention pour atteindre la cible de l'invention soit une nuance peu couteuse permettant d'atteindre une limite d'élasticité supérieure ou égale à 1300 MPa, ainsi qu'un allongement à rupture supérieur ou égal à 4%. L'acier n°2 est un acier maraging. L'acier N°3 est un acier pour l'emboutissage à chaud, l'acier dit 22MnB5.

Le tableau 1 donne les compositions chimiques des aciers coulés en pourcentage massique, les compositions d'éléments ne correspondant pas à l'invention étant soulignées.

Tableau 1

| Aciers | C | Mn | Si | Ti | Ni | Al | Cr | Cu |
|---|---|---|---|---|---|---|---|---|
| 1 | 0,03 | 3,76 | 1,99 | 0,97 | 3,01 | 0,01 | <0,002 | 0,0007 |
| 2 | 0,006 | <0,2 | 0,047 | 0,44 | 18,24 | 0,087 | 0,053 | 0,053 |
| 3 | 0,23 | 1,18 | 0,26 | 0,04 | 0,01 | 0,053 | 0,18 | 0,02 |
| | | | | | | | | |
| Aciers | Co | Mo | S | P | Nb | V | B | N |
| 1 | <0,002 | 0,001 | <0,001 | 0,002 | <0,002 | <0,002 | 0,0005 | 0,0039 |
| 2 | 8,86 | 5,03 | <0,001 | <0,02 | <0,002 | <0,002 | <0,001 | <0,002 |
| 3 | <0,002 | 0,002 | 0,0008 | 0,0125 | <0,002 | 0,0007 | 0,0029 | 0,0039 |

Le tableau 2 donne la somme Si+Ti, les rapports Si/Ti et les températures de transformation martensitiques pour les compositions chimiques du tableau 1.

Tableau 2

| Aciers | Si+Ti | Ti/Si | Ms (°C) |
|---|---|---|---|
| 1 | 2,96 | 0,49 | 398 |
| 2 | 0,49 | 9,36 | 343 |
| 3 | 0,3 | 0,15 | 440 |

Ces trois compositions ont été coulées pour former des brames qui ont, par la suite, subi les paramètres suivants de laminage:

- Réchauffage à 1200°C pendant 45 minutes
- Réduction d'épaisseur de 90% par laminage à chaud avec une température de fin de laminage de 900°C.
- Refroidissement de l'acier à la sortie du dernier rouleau de laminage jusqu'à 200°C.
- La vitesse de refroidissement de la température de fin de laminage $T_{fl}$= 900°C jusqu'à la température de bobinage $T_{bob}$ de 200°C a été de 100°C par seconde puis le refroidissement s'est effectué à l'air.

- A l'ambiante, la tôle laminée à chaud oxydée est décapée par un procédé chimique de décapage.
- L'épaisseur de la tôle est ensuite réduite de 70% par laminage à froid.

L'épaisseur des tôles obtenues est comprise entre 0,8 et 2,4 mm.

Les tôles ainsi obtenues ont ensuite été découpées pour obtenir des flans puis elles subissent les traitements thermiques résumés au tableau 3 avec pour colonnes:

- la vitesse de chauffe : $V_{C1}$ en °C/s,
- la température d'austénitisation $T_\gamma$ en °C,
- le temps d'austénitisation $t_\gamma$ en secondes,
- la vitesse moyenne de refroidissement $V_{ref1}$ en °C/s,
- la température $T_{int}$ d'arrêt du refroidissement $V_{ref1}$,
- la deuxième chauffe pour effectuer le traitement thermique de précipitation $V_{C2}$ en °C/s,
- la température de maintien de précipitation $T_{OA}$ en °C,
- le temps de maintien de précipitation $t_{OA}$ en minutes,
- le refroidissement final à l'air $V_{ref2}$.

Tableau 3

| Essai | Aciers | $V_{C1}$ (°C/s) | $T_\gamma$ (°C) | $t_\gamma$ (sec) | Vref1 (°C/s) | $T_{int}$ (°C) | $V_{c2}$ (°C/s) | $T_{OA}$ (°C) | $t_{OA}$ (min) | $V_{ref2}$ |
|---|---|---|---|---|---|---|---|---|---|---|
| A | 1 | 5 | 950 | 300 | 30 | 25 | 5 | 500 | 180 | air |
| B | 2 | 5 | 950 | 300 | 30 | 200 | 5 | 480 | 180 | air |
| C | 3 | 5 | 950 | 300 | 30 | 25 | 5 | 500 | 30 | air |
| D | 3 | 5 | 950 | 300 | 30 | 25 | 5 | 400 | 30 | air |
| E | 3 | 5 | 950 | 300 | 30 | 25 | 5 | 600 | 30 | air |

Sur les aciers des essais A et B, un emboutissage du flan a été effectué après austénitisation à 950°C pendant 5 min et avant le refroidissement Vref1. Cela a permis de former un pied milieu et d'illustrer la capacité d'emboutissage à chaud des aciers de l'invention. Suite à cela, un traitement thermique de 500°C pendant 3 heures (180 minutes) a permis d'atteindre un niveau de limite d'élasticité supérieure à 1300 MPa et un allongement total au-delà de 4% sur la pièce issue de l'acier 1 essai A comme l'illustre le tableau 4.

Un échantillon de l'acier 1 ayant subi l'essai A a été revêtu au trempé d'un alliage de Zn avec la composition suivante pour le bain: 0.208 % d'Al et 0.014 % de Fe, le solde étant du zinc. Il s'est ainsi formé une couche interfaciale de $Fe_2Al_5(Zn)$ surmontée d'une couche d'alliage de zinc ayant une composition quasiment identique à celle du bain. Le revêtement obtenu est adhérent et couvrant.

Afin d'apporter de la précision concernant la réponse mécanique des aciers conçus selon l'invention, le tableau 4 résume les propriétés mécaniques obtenues lorsque les essais A à E sont conduits :

Tableau 4

| Essai | Aciers | Limite d'élasticité (MPa) | Résistance mécanique (MPa) | Allongement à rupture A% |
|---|---|---|---|---|
| A | 1 | 1376 | 1437 | 7,9 |
| B | 2 | 1930 | 1950 | 3,5 |
| C | 3 | 846 | 903 | 11,9 |
| D | 3 | 1048 | 1193 | 7,0 |
| E | 3 | 704 | 798 | 13,9 |

L'essai B n'est pas conforme à l'invention, du fait de l'utilisation d'une nuance maraging qui mène à un allongement à la rupture insuffisant. En outre, la résistance mécanique est élevée avant même l'emboutissage, ce qui réduit la formabilité lors de l'emboutissage.

L'essai C effectué avec l'acier issu de la coulée 3 ne correspond pas aux caractéristiques mécaniques requises par l'invention car la composition chimique ne permet pas d'avoir toutes les caractéristiques techniques visées et nécessaires pour atteindre 1500 MPa de limite d'élasticité avec 4% d'allongement total. La teneur en carbone est trop élevée et les teneurs en silicium et titane ne permettent pas d'avoir les précipités durcissant visés dans le cadre de l'invention. Ainsi le niveau de la limite d'élasticité est largement en deçà de 1300 MPa.

Les essais D et E couvrent respectivement les limites inférieures (400°C) et supérieures (600°C) pour $T_{OA}$ dans la gamme visée. Aucune de ces températures ne permet d'atteindre la cible, en termes de limite d'élasticité, car il s'agira, en l'occurrence, d'un revenu de martensite dont la montée en température dans la gamme décrite mènera à un adoucissement structurel.

L'invention permet ainsi la fabrication de pièces, éventuellement revêtues au trempé ou par dépôt électrolytique, présentant des caractéristiques mécaniques telles que la limite d'élasticité est supérieure ou égale à 1300MPa et son allongement à rupture est supérieur ou égal 4% après le traitement thermique de durcissement. Ce traitement thermique assure des propriétés mécaniques stables et particulièrement élevées sur la pièce finale ou sur la zone ciblée pour subir le traitement thermique en cas de flan raboutés par exemple.

Ainsi, ces pièces pourront être utilisées avec profit, par exemple et de manière non limitative, comme pièce de sécurité anti-intrusive ou de renfort pour la construction de véhicules terrestres à moteurs.

Ces pièces pourront être à épaisseur variable du fait du soudage avec d'autres aciers ou du laminage flexible de l'acier de l'invention, c'est à dire du laminage d'une même tôle entre deux rouleaux de laminage à écartement variable permettant d'avoir au moins deux épaisseurs différentes sur cette tôle à l'issue du laminage.

**Revendications**

1. Tôle ou flan en acier laminé dont la composition chimique comprend, les teneurs étant exprimées en pourcentage en poids :

$$C \leq 0,1\%$$

$$0,5\% \leq Mn \leq 7\%$$

$$0,5\% \leq Si \leq 3,5\%$$

$$0,5\% \leq Ti \leq 2\%$$

$$2\% \leq Ni \leq 7\%$$

$$Al \leq 0,10\%$$

$$Cr \leq 2\%$$

$$Cu \leq 2\%$$

$$Co \leq 2\%$$

$$Mo \leq 2\%$$

$$S \leq 0,005\%$$

P ≤ 0,03%

Nb ≤ 0,1%

V ≤ 0,1%

B < 0,005%

N ≤ 0,008%

étant entendu que les teneurs en silicium et en titane sont telles que :

$$Si + Ti ≥ 2,5\ \%$$

$$\frac{Ti}{Si} ≥ 0,3$$

le reste de la composition étant constitué de fer et d'impuretés inévitables résultant de l'élaboration.

2. Tôle ou flan en acier selon la revendication 1, dont la composition chimique comprend, les teneurs étant exprimées en pourcentage en poids :

C ≤ 0,050 %

3 ≤ Mn ≤ 5%

1,0 ≤ Si ≤ 3,0%

0,5 ≤ Ti ≤ 1,5%

2,5 ≤ Ni ≤ 3,5%

Al ≤ 0,10%

Cr ≤ 1%

Cu ≤ 0,05%

Co ≤ 1%

$$Mo \leq 2\%$$

$$S \leq 0,005\%$$

$$P \leq 0,03\%$$

$$Nb \leq 0,1\%$$

$$V \leq 0,1\%$$

$$B < 0,005\%$$

$$N \leq 0,008\%$$

étant entendu que les teneurs en silicium et en titane sont telles que :

$$Si + Ti \geq 2,5\ \%$$

$$\frac{Ti}{Si} \geq 0,3$$

le reste de la composition étant constitué de fer et d'impuretés inévitables résultant de l'élaboration.

3. Pièce en acier fabriquée à partir d'une tôle ou d'un flan selon l'une quelconque des revendications 1 ou 2, dont la microstructure comprend au moins 95% de martensite, et des précipités intermétalliques de type $Fe_2TiSi$.

4. Pièce en acier selon la revendication 3, pour laquelle la fraction surfacique desdits précipités intermétalliques est comprise entre 1 et 5 %.

5. Pièce en acier selon la revendication 3 ou la revendication 4, pour laquelle le rayon moyen desdits précipités intermétalliques est compris entre 1 et 10 nanomètres.

6. Pièce en acier selon l'une quelconque des revendications 3 à 5, dont la limite d'élasticité est supérieure ou égale à 1300MPa et dont l'allongement à rupture est supérieur ou égal à 4%.

7. Pièce en acier selon l'une quelconque des revendications 3 à 6, comprenant un revêtement contenant du zinc, un alliage à base zinc ou un alliage de zinc.

8. Pièce en acier selon l'une quelconque des revendications 3 à 6, comprenant un revêtement contenant de l'aluminium, un alliage à base d'aluminium, ou un alliage d'aluminium.

9. Procédé de fabrication d'une pièce en acier, comportant les étapes successives selon lesquelles :

- on approvisionne une tôle d'acier laminé de composition selon la revendication 1 ou 2, dont la microstructure comprend moins de 1% de précipités intermétalliques de type $Fe_2TiSi$ en proportion surfacique.
- on découpe ladite tôle pour obtenir un flan,
- on chauffe ledit flan à une température $T_\gamma$ pendant un temps $t_\gamma$ dans un four de manière à lui conférer une structure totalement austénitique,

- on emboutit ledit flan dans un outil à une température supérieure à la température Ms pour obtenir une pièce puis
- on refroidit ladite pièce à une vitesse moyenne de refroidissement $V_{ref1}$ jusqu'à une température inférieure à la température Ms pour former une matrice martensitique puis
- on chauffe ladite pièce en acier à une température de maintien $T_{OA}$ pendant un temps de maintien $t_{OA}$, de manière à lui conférer les caractéristiques mécaniques visées par la précipitation d'intermétalliques de type $Fe_2TiSi$ entre 1% et 5% en proportion surfacique.

10. Procédé de fabrication d'une pièce en acier, comportant les étapes successives selon lesquelles :

- on approvisionne une tôle d'acier laminée de composition selon la revendication 1 ou 2, dont la microstructure comprend moins de 1% de précipités intermétalliques de type $Fe_2TiSi$ en proportion surfacique.
- on découpe ladite tôle pour obtenir un flan,
- on emboutit ledit flan,
- on chauffe ledit flan en acier à une température $T\gamma$ pendant un temps $t_\gamma$ dans un four de manière à conférer une structure totalement austénitique,
- on extrait ledit flan du four,
- on emboutit ledit flan dans un outil à une température au dessus de la température Ms pour obtenir une pièce,
- on refroidit ladite pièce à une vitesse moyenne de refroidissement $V_{ref1}$ jusqu'à une température inférieure à la température Ms,
- on chauffe ladite pièce en acier à une température de maintien $T_{OA}$ pendant un temps de maintien $t_{OA}$ de manière à lui conférer les caractéristiques mécaniques visées par précipitation d'intermétalliques de type $Fe_2TiSi$ entre 1% et 5% en proportion surfacique.

11. Procédé de fabrication selon la revendication 9 ou la revendication 10, pour lequel ladite température $T\gamma$ est comprise entre 700 et 1200 °C.

12. Procédé de fabrication selon la revendication 11, pour lequel ladite température $T\gamma$ est comprise entre 880 et 980 °C.

13. Procédé de fabrication selon l'une quelconque des revendications 9 à 12, pour lequel le temps de maintien $t\gamma$ est compris entre 60 et 360 secondes.

14. Procédé de fabrication selon l'une quelconque des revendications 9 à 13 pour lequel la vitesse moyenne de refroidissement $V_{ref1}$ est comprise entre 10 et 70°C/s.

15. Procédé de fabrication selon l'une quelconque des revendications 9 à 14 pour lequel ladite température de maintien $T_{OA}$ est comprise entre 400 et 600°C.

16. Procédé de fabrication selon l'une quelconque des revendications 9 à 15, pour lequel le temps de maintien $t_{OA}$ est compris entre 30 et 600 minutes.

17. Procédé de fabrication selon l'une quelconque des revendications 9 à 16, pour lequel ladite pièce chauffée à la température $T_{OA}$ pendant une durée $t_{OA}$ est ensuite revêtue de zinc, d'un alliage de zinc ou d'un alliage à base zinc.

18. Procédé de fabrication selon l'une quelconque des revendications 9 à 16, pour lequel ladite pièce chauffée à la température $T_{OA}$ pendant une durée $t_{OA}$ est ensuite revêtue d'aluminium, d'un alliage d'aluminium ou d'un alliage à base d'aluminium.

19. Utilisation d'une pièce selon l'une quelconque des revendications 1 à 8, ou fabriquée selon l'une quelconque des revendications 9 à 18, pour la fabrication de pièces de structures ou de sécurité pour véhicules terrestres à moteur.

**Patentansprüche**

1. Gewalztes Blech oder Zuschnitt aus Stahl, dessen chemische Zusammensetzung umfasst, wobei die Gehalte in Gewichtsprozenten ausgedrückt sind:

$$C \leq 0,1\%$$

$$0,5\% \leq Mn \leq 7\%$$

$$0,5\% \leq Si \leq 3,5\%$$

$$0,5\% \leq Ti \leq 2\%$$

$$2\% \leq Ni \leq 7\%$$

$$Al \leq 0,10\%$$

$$Cr \leq 2\%$$

$$Cu \leq 2\%$$

$$Co \leq 2\%$$

$$Mo \leq 2\%$$

$$S \leq 0,005\%$$

$$P \leq 0,03\%$$

$$Nb \leq 0,1\%$$

$$V \leq 0,1\%$$

$$B < 0,005\%$$

$$N \leq 0,008\%,$$

wobei vorausgesetzt ist, dass der jeweilige Gehalt an Silizium und an Titan derart ist, dass:

$$Si + Ti \geq 2,5\%$$

$$\frac{Ti}{Si} \geq 0,3$$

wobei der Rest der Zusammensetzung aus Eisen und nicht vermeidbaren Verunreinigungen aus der Bearbeitung gebildet ist.

2. Blech oder Zuschnitt aus Stahl nach Anspruch 1, dessen chemische Zusammensetzung umfasst, wobei die Gehalte in Gewichtsprozenten ausgedrückt sind:

$$C \le 0,050\%$$

$$3\% \le Mn \le 5\%$$

$$1,0\% \le Si \le 3,0\%$$

$$0,5\% \le Ti \le 1,5\%$$

$$2,5\% \le Ni \le 3,5\%$$

$$Al \le 0,10\%$$

$$Cr \le 1\%$$

$$Cu \le 0,05\%$$

$$Co \le 1\%$$

$$Mo \le 2\%$$

$$S \le 0,005\%$$

$$P \le 0,03\%$$

$$Nb \le 0,1\%$$

$$V \le 0,1\%$$

$$B < 0,005\%$$

$$N \le 0,008\%,$$

wobei vorausgesetzt ist, dass der jeweilige Gehalt an Silizium und an Titan derart ist, dass:

$$Si + Ti \geq 2{,}5\%$$

$$\frac{Ti}{Si} \geq 0{,}3$$

wobei der Rest der Zusammensetzung aus Eisen und nicht vermeidbaren Verunreinigungen aus der Bearbeitung gebildet ist.

3. Stahlteil, das aus einem Blech oder einem Zuschnitt nach einem beliebigen der Ansprüche 1 oder 2 hergestellt ist, dessen Mikrostruktur mindestens 95% Martensit und intermetallische Ausscheidungen des Typs $Fe_2TiSi$ umfasst.

4. Stahlteil nach Anspruch 3, wobei der Flächenanteil der intermetallischen Ausscheidungen zwischen 1 und 5% liegt.

5. Stahlteil nach Anspruch 3 oder Anspruch 4, für das der mittlere Radius der intermetallischen Ausscheidungen zwischen 1 und 10 Nanometern liegt.

6. Stahlteil nach einem beliebigen der Ansprüche 3 bis 5, dessen Elastizitätsgrenze größer oder gleich 1300 MPa ist und dessen Bruchdehnung größer oder gleich 4% ist.

7. Stahlteil nach einem beliebigen der Ansprüche 3 bis 6, eine Beschichtung umfassend, die Zink, eine Legierung auf Basis von Zink oder eine Zinklegierung enthält.

8. Stahlteil nach einem beliebigen der Ansprüche 3 bis 6, eine Beschichtung umfassend, die Aluminium, eine Legierung auf Basis von Aluminium oder eine Aluminiumlegierung enthält.

9. Verfahren zur Herstellung eines Stahlteils, die aufeinanderfolgenden Schritte umfassend, nach denen:

   - ein gewalztes Stahlblech der Zusammensetzung nach Anspruch 1 oder 2 bereitgestellt wird, dessen Mikrostruktur weniger als 1% intermetallischer Ausscheidungen des Typs $Fe_2TiSi$ im Flächenverhältnis umfasst,
   - das Blech zugeschnitten, um einen Zuschnitt zu erhalten,
   - der Zuschnitt auf eine Temperatur $T_\gamma$ während einer Zeit $t_\gamma$ in einem Ofen aufgeheizt wird, derart, dass ihm eine vollständig austenitische Struktur verliehen wird,
   - der Zuschnitt in einem Werkzeug bei einer Temperatur größer als die Temperatur Ms umgeformt wird, um ein Teil zu erhalten, dann
   - das Teil bei einer mittleren Abkühlgeschwindigkeit $V_{ref1}$ auf eine Temperatur kleiner als die Temperatur Ms abgekühlt wird, um eine Martensitmatrix zu bilden, dann
   - das Stahlteil auf eine Erhaltungstemperatur $T_{OA}$ während einer Erhaltungszeit $t_{OA}$ aufgeheizt wird, um ihm durch die intermetallischen Ausscheidungen des Typs $Fe_2TiSi$ zwischen 1% und 5% im Flächenverhältnis die angestrebten mechanischen Eigenschaften zu verleihen.

10. Verfahren zur Herstellung eines Stahlteils, die aufeinanderfolgenden Schritte umfassend, nach denen:

    - Ein gewalztes Stahlblech der Zusammensetzung nach Anspruch 1 oder 2 bereitgestellt wird, dessen Mikrostruktur mindestens 1% intermetallischer Ausscheidungen des Typs $Fe_2TiSi$ im Flächenverhältnis umfasst,
    - das Blech zugeschnitten wird, um einen Zuschnitt zu erhalten,
    - der Zuschnitt umgeformt wird,
    - der Stahlzuschnitt auf eine Temperatur $T_\gamma$ während einer Zeit $t_\gamma$ in einem Ofen aufgeheizt wird, um ihr eine vollständig austenitische Struktur zu verleihen,
    - der Zuschnitt aus dem Ofen herausgenommen wird,
    - der Zuschnitt in einem Werkzeug bei einer Temperatur über der Temperatur Ms umgeformt wird, um ein Teil zu erhalten,
    - das Teil bei einer mittleren Abkühlgeschwindigkeit $V_{ref1}$ bis auf eine Temperatur kleiner als die Temperatur Ms abgekühlt wird,
    - das Stahlteil auf eine Erhaltungstemperatur $T_{OA}$ während einer Erhaltungszeit $t_{OA}$ aufgeheizt wird, um ihm durch die intermetallischen Ausscheidungen des Typs $Fe_2TiSi$ zwischen 1% und 5% im Flächenverhältnis die angestrebten mechanischen Eigenschaften zu verleihen.

11. Verfahren zur Herstellung nach Anspruch 9 oder Anspruch 10, bei dem die Temperatur $T_\gamma$ zwischen 1% und 5% liegt.

12. Verfahren zur Herstellung nach Anspruch 11, bei dem die Temperatur $T_\gamma$ zwischen 880 und 980°C liegt.

13. Verfahren zur Herstellung nach einem beliebigen der Ansprüche 9 bis 12, bei dem die Erhaltungszeit $t_\gamma$ zwischen 60 und 360 Sekunden liegt.

14. Verfahren zur Herstellung nach einem beliebigen der Ansprüche 9 bis 13, für das die mittlere Abkühlgeschwindigkeit $V_{ref1}$ zwischen 10 und 70°C/s liegt.

15. Verfahren zur Herstellung nach einem beliebigen der Ansprüche 9 bis 14, bei dem die Erhaltungstemperatur $T_{OA}$ zwischen 400 und 600°C liegt.

16. Verfahren zur Herstellung nach einem beliebigen der Ansprüche 9 bis 15, bei dem die Erhaltungszeit $t_{OA}$ zwischen 30 und 600 Minuten liegt.

17. Verfahren zur Herstellung nach einem beliebigen der Ansprüche 9 bis 16, bei dem das auf die Temperatur $T_{OA}$ während einer Dauer $t_{OA}$ aufgeheizte Teil anschließend mit Zink, einer Zinklegierung oder einer Legierung auf Basis von Zink beschichtet wird.

18. Verfahren zur Herstellung nach einem beliebigen der Ansprüche 9 bis 16, bei dem das auf die Temperatur $T_{OA}$ während einer Dauer $t_{OA}$ aufgeheizte Teil anschließend mit Aluminium, einer Aluminiumlegierung oder einer Legierung auf der Basis von Aluminium beschichtet wird.

19. Verwendung eines Teils nach einem beliebigen der Ansprüche 1 bis 8 oder hergestellt nach einem beliebigen der Ansprüche 9 bis 18 für die Herstellung von Strukturteilen oder Sicherheitsteilen für motorisierte Landfahrzeuge.

**Claims**

1. Rolled steel sheet or blank, the chemical composition of which comprises, the contents being expressed as a percentage by weight:

$$C \leq 0.1\%$$

$$0.5\% \leq Mn \leq 7\%$$

$$0.5\% \leq Si \leq 3.5\%$$

$$0.5\% \leq Ti \leq 2\%$$

$$2\% \leq Ni \leq 7\%$$

$$Al \leq 0.10\%$$

$$Cr \leq 2\%$$

$$Cu \leq 2\%$$

$$Co \leq 2\%$$

$$Mo \leq 2\%$$

$$S \leq 0.005\%$$

$$P \leq 0.03\%$$

$$Nb \leq 0.1\%$$

$$V \leq 0.1\%$$

$$B < 0.005\%$$

$$N \leq 0.008\%$$

it being understood that the contents of silicon and of titanium are such that:

$$Si + Ti \geq 2.5\%$$

$$\frac{Ti}{Si} \geq 0.3$$

the remainder of the composition consisting of iron and inevitable impurities resulting from production.

2. Steel sheet or blank according to claim 1, the chemical composition of which comprises, the contents being expressed as a percentage by weight:

$$C \leq 0.050\%$$

$$3 \leq Mn \leq 5\%$$

$$1.0 \leq Si \leq 3.0\%$$

$$0.5 \leq Ti \leq 1.5\%$$

$$2.5 \leq Ni \leq 3.5\%$$

$$Al \leq 0.10\%$$

$$Cr \leq 1\%$$

$$Cu \leq 0.05\%$$

$$Co \leq 1\%$$

$$Mo \leq 2\%$$

$$S \leq 0.005\%$$

$$P \leq 0.03\%$$

$$Nb \leq 0.1\%$$

$$V \leq 0.1\%$$

$$B < 0.005\%$$

$$N \leq 0.008\%$$

it being understood that the contents of silicon and of titanium are such that:

$$Si + Ti \geq 2.5\%$$

$$\frac{Ti}{Si} \geq 0.3$$

the remainder of the composition consisting of iron and inevitable impurities resulting from production.

3. Steel part fabricated from a sheet or a blank according to any one of claims 1 or 2, the microstructure of which comprises at least 95% martensite, and intermetallic precipitates of type $Fe_2TiSi$.

4. Steel part according to claim 3, for which the surface area of said intermetallic precipitates is between 1 and 5%.

5. Steel part according to claim 3 or claim 4, for which the average radius of said intermetallic precipitates is between 1 and 10 nanometres.

6. Steel part according to any one of claims 3 to 5, the yield strength of which is greater than or equal to 1300 MPa and the elongation at break of which is greater than or equal to 4%.

7. Steel part according to any one of claims 3 to 6, comprising a coating containing zinc, a zinc-based alloy or a zinc alloy.

8. Steel part according to any one of claims 3 to 6, comprising a coating containing aluminium, an aluminium-based alloy or an aluminium alloy.

9. Method of fabricating a steel part, comprising the successive steps according to which:

    - a rolled steel sheet having a composition according to claim 1 or 2 is provided, the microstructure of which comprises, in terms of surface area, less than 1% intermetallic precipitates of type $Fe_2TiSi$,
    - said sheet is cut so as to obtain a blank,
    - said blank is heated at a temperature $T\gamma$ for a time $t_\gamma$ in a furnace so as to confer thereon a completely austenitic structure,
    - said blank is stamped in a tool at a temperature greater than the temperature Ms so as to obtain a part, then
    - said part is cooled at an average cooling rate $V_{ref1}$ to a temperature below the temperature Ms so as to form a martensitic matrix, then
    - said steel part is heated at a hold temperature $T_{OA}$ for a hold time $t_{OA}$ so as to confer thereon the mechanical characteristics intended by the precipitation of, in terms of surface area, between 1% and 5% intermetallics of type $Fe_2TiSi$.

10. Method of fabricating a steel part, comprising the successive steps according to which:

    - a rolled steel sheet having a composition according to claim 1 or 2 is provided, the microstructure of which comprises, in terms of surface area, less than 1% intermetallic precipitates of type $Fe_2TiSi$,
    - said sheet is cut so as to obtain a blank,
    - said blank is stamped,
    - said steel blank is heated at a temperature $T\gamma$ for a time $t_\gamma$ in a furnace so as to confer thereon a completely austenitic structure,
    - said blank is removed from the furnace,
    - said blank is stamped in a tool at a temperature above the temperature Ms so as to obtain a part,
    - said part is cooled at an average cooling rate $V_{ref1}$ to a temperature below the temperature Ms,
    - said steel part is heated at a hold temperature $T_{OA}$ for a hold time $t_{OA}$ so as to confer thereon the mechanical characteristics intended by the precipitation of, in terms of surface area, between 1% and 5% intermetallics of type $Fe_2TiSi$.

11. Fabrication method according to claim 9 or claim 10, for which said temperature $T\gamma$ is between 700 and 1200°C.

12. Fabrication method according to claim 11, for which said temperature $T\gamma$ is between 880 and 980°C.

13. Fabrication method according to any one of claims 9 to 12, for which the hold time $t\gamma$ is between 60 and 360 seconds.

14. Fabrication method according to any one of claims 9 to 13, for which the average cooling rate $V_{ref1}$ is between 10 and 70°C/s.

15. Fabrication method according to any one of claims 9 to 14, for which said hold temperature $T_{OA}$ is between 400 and 600°C.

16. Fabrication method according to any one of claims 9 to 15, for which the hold time $t_{OA}$ is between 30 and 600 minutes.

17. Fabrication method according to any one of claims 9 to 16, for which said part heated at the temperature $T_{OA}$ for a time $t_{OA}$ is then coated with zinc, a zinc alloy or a zinc-based alloy.

18. Fabrication method according to any one of claims 9 to 16, for which said part heated at the temperature $T_{OA}$ for a time $t_{OA}$ is then coated with aluminium, an aluminium alloy or an aluminium-based alloy.

19. Use of a part according to any one of claims 1 to 8, or fabricated according to any one of claims 9 to 18, for fabricating structural parts or safety parts for land motor vehicles.

Figure 1

Contrainte (MPa)

A (%)

Figure 2

2 µm

Figure 3

Fe₂ Ti Si

20 nm

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009145563 A

- WO 200136699 A

**Littérature non-brevet citée dans la description**

- *Materials Science and Engineering,* 1999, vol. A273-275, 40-57

- **K. ISHIDA.** *Journal of Alloys Compound.,* 1995, vol. 220, 126